## Europäisches Patentamt

## European Patent Office

## Office européen des brevets

(11) Publication number: **0 138 336**
A1

# EUROPEAN PATENT APPLICATION

(21) Application number: **84305785.2**

(22) Date of filing: **23.08.84**

(51) Int. Cl.⁴: **B 23 B 29/03**, B 23 B 51/00

(30) Priority: **23.08.83 US 526057**

(43) Date of publication of application: **24.04.85**
**Bulletin 85/17**

(84) Designated Contracting States: **BE DE FR GB NL SE**

(71) Applicant: **TRIANGLE GRINDING INC., 7710 Gulf Freeway, Houston Texas 77207 (US)**

(72) Inventor: **Takacs, Victor C., 2612 South Wildwind Circle, Woodlands Texas 77380 (US)**
Inventor: **Nixon, Michael John, 12034 Fairbury, Houston Texas (US)**
Inventor: **Baezner, Alan Louis, 5609 Valerie, Houston Texas (US)**

(74) Representative: **Purvis, William Michael Cameron et al, D. Young & Co. 10 Staple Inn, London WC1V 7RD (GB)**

(54) **Cutting tool.**

(57) A cutting tool has separate holder means (12) and head means (11) to facilitate the use of interchangeable heads of various sizes. Wedging means (17, 21) is provided between the holder (12) and the head (11), indexing means (18, 22) is provided to index the head (11) and the holder (12) and retaining means (23, 19) retains the head means (11) in the holder means (12).

1

## CUTTING TOOL

This invention relates to a head boring cutting tool and, in particular, to an interchangeable head for such a cutting tool.

Boring heads on cutting tools are used for various applications in different sizes and configurations and, therefore, interchangeability of these heads for different tasks is necessary. Present interchangeable heads, however, are unnecessarily time consuming to change since they require multiple connecting screws.

Furthermore, because of the close tolerances necessary for cutting tools, the tool must remain rigid with all of the heads that may be used. Present boring heads utilize close tolerances between bands of material about the circumference of the support shaft and the head itself. These tolerances are difficult to maintain, particularly under the high loading conditions under which cutting tools are used.

Yet a further problem relates to the size of the head. Using a multiple bolt connection and the concomitant need for increased head material to support a head on the support shaft restricts the size of the inserts that can be held in the cutting tool. Thus, relatively smaller diameter heads cannot be utilized.

According to the invention, there is provided a cutting tool comprising a head portion, holder means to hold the head portion, a wedging portion on one of the head portion and the holder means, a complementary conical recess to receive the wedging portion on the other of the head portion and the holder means, locator means between the head portion and the holder means and fastening means to connect the head portion and the holder means.

The invention is diagrammatically illustrated by way of example with reference to the accompanying drawings, in which:

Figure 1 is an exploded view of a cutting head and holder of a cutting tool according to the invention;

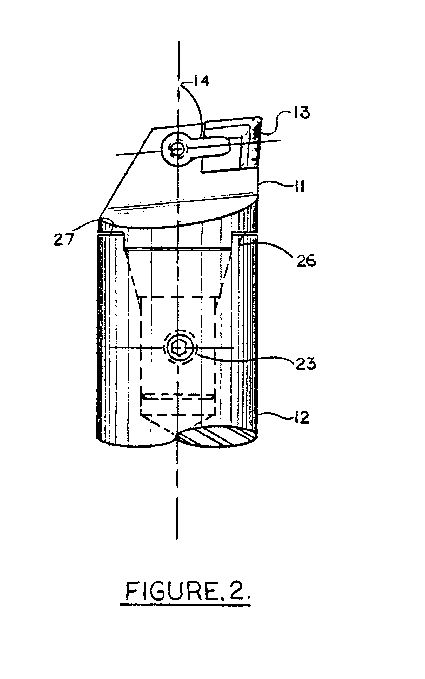

Figure 2 depicts the apparatus of Figure 1 in an assembled configuration; and

0138336

Figure 3 is a partial view of the cutting head and holder in a partially assembled condition.

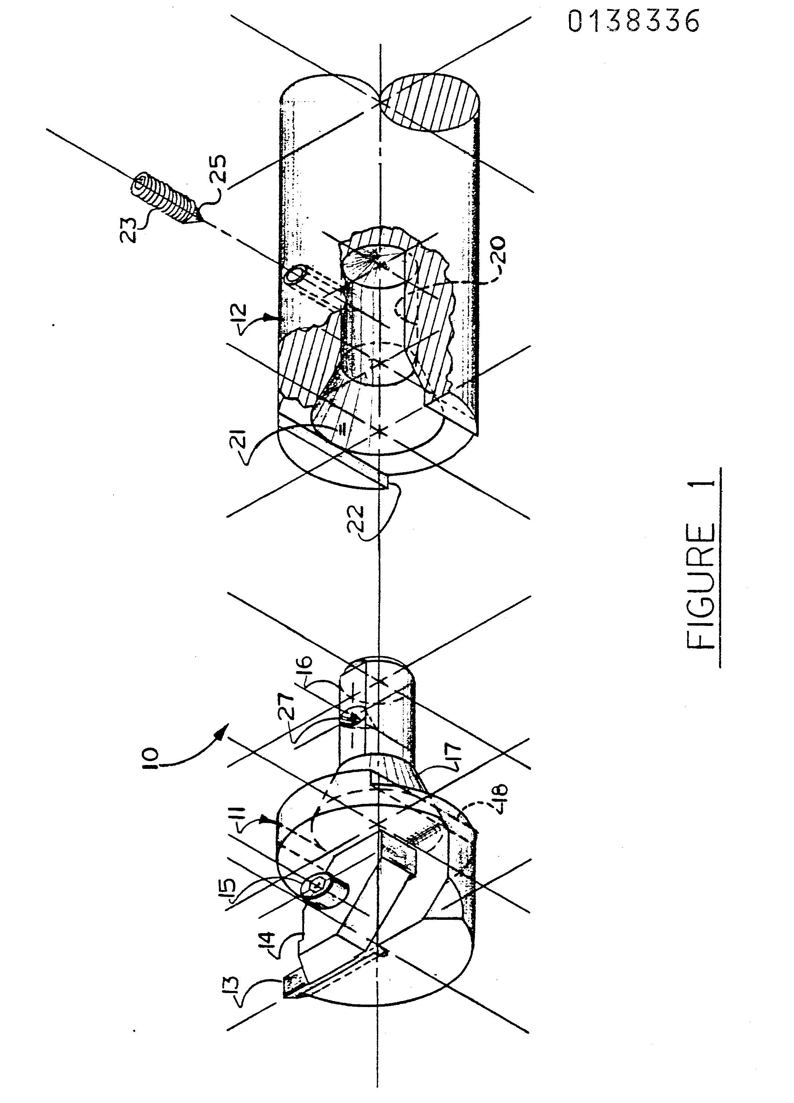

Referring to the drawings, a cutting tool is shown generally at 10 in Figure 1. It comprises a head portion generally shown at 11, a holder means or bar generally shown at 12, and a cutting insert or blade 13 mounted on the head 11. The cutting blade 13 is mounted in the head portion 11 by a clamp 14 and a socket head cap screw 15 and extends outwardly from the outside diameter of the head portion 11 and the bar 12.

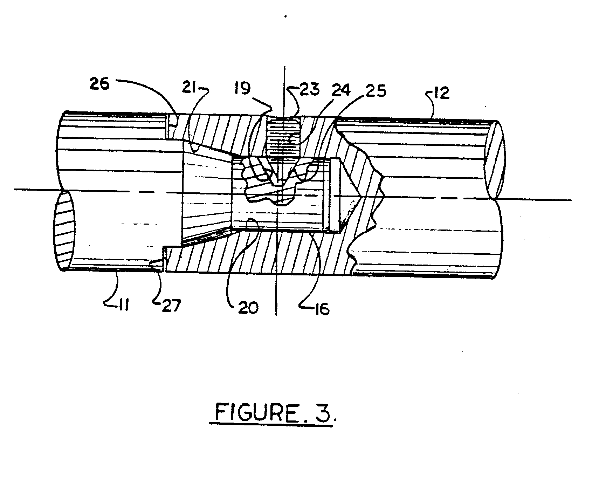

A shaft 16 extends downwardly from the head portion 11 as seen in Figure 1 and a conical transition or wedging portion 17 is provided between the shaft 16 and the head portion 11. A locator key 18 is formed on the lower edge of the head portion 11 before the commencement of the conical transition or wedging portion 17. A conical recess 19 (as best seen in Figure 3) is machined into the shaft 16.

The holder means or bar 12 has a receiving diameter 20 machined therein to receive the shaft 16 in a close fit. Similarly, a complementary conical recess 21 is machined in the bar 12 to receive and hold the conical transition or wedging portion 17 of the head 11 in a similarly close fit. A receiving key 22 is machined in the bar 12 to match with the locator key 18 in the head portion 11.

A socket head set screw 23 is threaded into a threaded diameter 24 in the bar 12. The socket head set screw 23 has a conical shaped end portion 25 and this end portion 25 is received by the conical recess 19 in the shaft 16 of the head portion 11.

In operation, an appropriate cutting insert or blade 13 is securely mounted in the head portion 11 using the clamp 14 and the socket head cap screw 15. The shaft 16 of the head portion 11 is inserted into the receiving diameter 20 of the bar 12 using the appropriate positions of the locator key 18 and receiving keyway 22 on the head 11 and the bar 12, respectively, and using the correct positions of the threaded diameter 24 and the conical recess 19. A close fit occurs between the shaft 16 and the receiving diameter 20 of the bar 12. The conical transition or wedging portion 17 of the head portion 11 will match the contour of the complementary conical recess 21 in the bar 12 as the head portion 11 is inserted into the bar 12.

The socket head set screw 23 is then threaded into the threaded diameter 24 and the conical shaped end portion 25 will be received in the conical recess 19 machined in the shaft 16 as seen in Figure 3. The conical recess 19 is machined at a location in the shaft 16 such that when the socket head set screw 23 is tightened into its operating position, it will draw respectively opposed surfaces 26,27 on the head portion 11 and the bar 12, respectively, into a very close but non-contacting relationship. The cutting tool 10 is then ready for use.

When removing the head 11, the procedure is reversed. The socket head set screw 23 is screwed outwardly and, subsequently, the head portion 11 may be removed from the bar 12 and another head portion substituted therefor.

Of course, the shaft 16 and the conical transition or wedging portion 17 could be provided on the bar 12 with the complementary conical recess 21 and receiving diameter 20 being provided in the head portion 11. Similarly, the locator and receiving keyways 18,22 respectively, could also be reversed. A variety of cutting inserts 13 may be used and, as well, a variety of clamps 14 to hold the cutting inserts 13. Further, although the surfaces 26,27 on the head portion 11 and the bar 12, respectively, are preferably brought together in a non-contacting relationship, it is possible to form the tolerances in the conical recess 19 and the conical shaped end portion 25 of the socket head set screw 23 such that the surfaces 26,27 may be brought into a contacting operating relationship.

In a further modification, as the head diameter increases in size, where room is available, it may be desirable to provide multiple head screws to increase the holding force between the head portion and the holder means as is desired.

## CLAIMS

1      A cutting tool characterised by a head portion (11), holder means (12) to hold the head portion (11), a wedging portion (17) on one of the head portion (11) and the holder means (12), a complementary conical recess (21) to receive the wedging portion (17) on the other of the head portion (11) and the holder means (12), locator means (18,22) between the head portion (11) and the holder means (12) and fastening means (23,19) to connect the head portion (11) and the holder means (12).

2      A cutting tool according to claim 1, characterised in that the fastening means (23,19) is operable to draw the head portion (11) towards the holder means (12).

3      A cutting tool according to claim 1 or claim 2, characterised in that the wedging portion (17) comprises a circumferential cone means about the axis of the head means (11).

4      A cutting tool according to any one of claims 1 to 3, characterised in that the locator means (18,22) is a keyway between the head portion (11) and the holder means (12).

5      A cutting tool according to any one of claims 1 to 4, characterised in that the fastening means (23) extends from the holder (12) into the head means (11), the fastening means comprises a socket screw (23) conical shaped at the end (25) and extending into the head means (11), the head means (11) has a complementary conical receiving portion (19) and the socket screw (23) is operable to draw the head portion (11) into a close relationship with the holder means (12).

6      A cutting tool according to any one of claims 1 to 5, characterised in that the head portion (11) includes cutting insert means (13) fastened to the head portion (11).

7      A cutting tool characterised by a head portion (11), cutting insert means (13) fastened to the head portion (11), circumferential conical mounting means (17) about the axis of the head portion (11), holder means (12), conical mounting means (21) about the axis of the holder means (12) and complementary to the mounting means (17) of the head portion (11), locator means (18,22) between the head portion (11) and the holder means (12) and fastening means (23,19) between the head portion (11) and the holder means (12).

8      A head portion for a cutting tool characterised by a locator means (18), a wedging portion (17) extending from a locator means (18), a shaft (16) extending from the wedging portion (17) and a fastener receiving recess (19) in the shaft (16).

9      A head portion according to claim 8, characterised in that the wedging portion (17) comprises a circumferential cone means about the axis of the head portion (11).

10      A head portion according to claim 9, characterised in that the locator means (18) is a keyway.

0138336

FIGURE 1

FIGURE. 2.

FIGURE. 3.

| DOCUMENTS CONSIDERED TO BE RELEVANT | | | EP 84305785.2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| Y | AT - B - 216 860 (BREUNING) | 1 | B 23 B 29/03 |
| A | * Totality * | 3,8,9 | B 23 B 51/00 |
| | -- | | |
| Y | US - A - 4 022 539 (BRUCE) | 1 | |
| A | * Totality * | 2,5 | |
| | -- | | |
| A | DE - A1 - 2 918 243 (KAISER) | 1 | |
| | * Totality * | | |
| | ---- | | |

| | TECHNICAL FIELDS SEARCHED (Int. Cl.4) |
|---|---|
| | B 23 B 29/00 |
| | B 23 B 31/00 |
| | B 23 B 51/00 |
| | B 23 Q 3/00 |

The present search report has been drawn up for all claims

| Place of search | Date of completion of the search | Examiner |
|---|---|---|
| VIENNA | 06-12-1984 | FUCHS |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82